# EUROPEAN PATENT SPECIFICATION

(11) **EP 3 228 989 B1**
(45) Date of publication and mention of the grant of the patent: **16.10.2019**
(21) Application number: 17152281.6
(22) Date of filing: 19.01.2017
(51) Int. Cl.: G01C 21/36, G08G 1/14, G01C 21/34, H04W 4/021

(54) **VEHICLE CONTROL METHOD AND APPARATUS, COMPUTER PROGRAM AND RECORDING MEDIUM**
FAHRZEUGSTEUERUNGSVERFAHREN UND -VORRICHTUNG, COMPUTERPROGRAMM UND AUFZEICHNUNGSMEDIUM
PROCÉDÉ ET APPAREIL DE COMMANDE DE VÉHICULE, PROGRAMME INFORMATIQUE ET SUPPORT D'ENREGISTREMENT

(30) Priority: 06.04.2016 CN 201610210598
(43) Date of publication of application: 11.10.2017
(73) Proprietor: Beijing Xiaomi Mobile Software Co., Ltd., Beijing 100085 (CN)
(72) Inventor: ZHANG, Xu, Haidian District, Beijing 100085 (CN)
(74) Representative: Reeve, Nicholas Edward

(56) References cited:
- WO-A1-2015/114592
- DE-B3-102015 007 531
- US-A1- 2010 156 672
- US-A1- 2014 302 875

## Description

### TECHNICAL FIELD

The present invention is related to the technical field of automatic control, and more particularly to a vehicle control method and apparatus, a computer program and a recording medium.

### BACKGROUND

With the development of technologies and the improvement of people's living standards, more and more people acquire their driver licenses and buy family-use cars as transportation means. As a result, it is getting harder for drivers to find parking spaces.

Currently, if a proper parking space cannot be found when a driver temporarily parks his/her car, he/she will usually park the car at a road side or near an occupied parking space. When the temporarily parked car blocks the moving route of a passing-by vehicle or the departure route of the car in the parking space, the owner of the passing-by vehicle or the owner of the car in the parking space can only contact the owner of the temporarily parked car for moving the temporarily parked car through a phone number left by the owner of the temporarily parked car. If the contact information of the owner of the temporarily parked car is not available, the owner of the passing-by vehicle or the owner of the car in the parking space can only make a detour or wait in patience.

US2010/156672 (D1) discloses an auto valet parking method which determines the location of a slot at which a target vehicle may be parked. The method may refer to a past parking history of the target vehicle in order to determine the location of the vehicle in order to minimize the movement of the vehicle and park the vehicle as rapidly as possible. When it is determined that some vehicles will more rapidly exit than other vehicles, they will be parked at a front portion of the parking place entrance.

WO2015/114592 (D2) discloses a self-automated parking lot. It discloses a system for moving autonomously in platoon one or more rows of already parked vehicles in order to make available a parking space for a vehicle arriving to the parking space; and moving autonomously in platoon one or more rows of parked vehicles in order to make a parked vehicle able to exit the parking space. In WO2015/114592, a vehicle can give an estimate of its exit time, based on the self-learned routine of its passenger, or on an indication entered by the same passenger. The parking lot computer can then inform the vehicle of its parking space number, indicating the exact route to reach this parking space. As vehicles are parked in a manner that maximises space usage, this path can require that other vehicles already parked in the parking lot are moved.

US2014/302875 (D3) determines the departure time information for at least one vehicle, wherein the departure time is determined prior to an arrival of the at least one vehicle at a parking facility. The departure time information for other vehicles parked at the parking facility is determined, and processed to determine at least one parking location for the at least one vehicle. Cars that are leaving last may be parked at locations behind those leaving earlier.

### SUMMARY OF THE INVENTION

Embodiments of the present invention provide a vehicle control method and apparatus, a computer program and a recording medium as follows.

According to a first aspect of the embodiments of the present invention, there is provided a vehicle control method, according to claim 1, comprising: acquiring position information and trip information of at least one vehicle including a first vehicle which has entered or is to enter a parking state, the first vehicle being an unmanned vehicle, and the trip information including a booked departure time and optionally at least one of a real-time navigation route and a booked navigation route; determining a first parking position of the first vehicle based on the position information and the trip information of the at least one vehicle; and sending a first instruction to the first vehicle instructing the first vehicle to move into the first parking position. Determining the first parking position of the first vehicle based on the position information and the trip information of the at least one vehicle comprises: when the booked departure time of the first vehicle is not later than a designated time point, determining an empty parking position in a first set of parking positions as the first parking position; when the booked departure time of the first vehicle is later than the designated time point, determining an empty parking position in a second set of parking positions as the first parking position. For any parking position in the first set of parking positions, the parking position is on a departure route from at least one parking position in the second set of parking positions.

Optionally, the at least one vehicle includes a second vehicle which has entered the parking state, and the trip information includes the booked departure time and the booked navigation route. Determining the first parking position of the first vehicle based on the position information and the trip information of the at least one vehicle comprises: when the booked departure time of the first vehicle is later than that of the second vehicle and the first vehicle is on the booked navigation route of the second vehicle, determining the first parking position of the first vehicle based on the position information of the first vehicle and the booked navigation route of the second vehicle, the first parking position being out of the booked navigation route of the second vehicle; or when the booked departure time of the first vehicle is null, the booked departure time of the second vehicle is not null, and the first vehicle is on the booked navigation route of the second vehicle, determining the first parking position of the first vehicle based on the position information of the first vehicle and the booked navigation route of the second vehicle, the first parking position being out of the booked navigation route of the second vehicle.

Optionally, the second vehicle is an unmanned vehicle, and the first parking position is a position where the second vehicle is located. The method further comprises: determining a second parking position of the second vehicle, the second parking position being an original position where the first vehicle is located before receiving the first instruction; and sending a second instruction to the second vehicle instructing the second vehicle to move into the second parking position.

Optionally, the at least one vehicle includes a second vehicle which is in a moving state, and trip information of the second vehicle includes a real-time navigation route of the second vehicle. Determining the first parking position of the first vehicle based on the position information and the trip information of the at least one vehicle comprises: when the first vehicle is on the real-time navigation route of the second vehicle, determining the first parking position of the first vehicle based on the position information of the first vehicle and the real-time navigation route of the second vehicle, the first parking position being out of the real-time navigation route of the second vehicle.

Optionally, the method further comprises: when the second vehicle passes an original position where the first vehicle is located before receiving the first instruction, sending a third instruction to the first vehicle instructing the first vehicle to return to the original position.

Optionally, before sending the first instruction to the first vehicle, the method further comprises: when the first parking position is the empty parking position in the first set of parking positions, detecting whether the first parking position is on a unique arrival route to a third parking position, which is an empty parking position in the second set of parking positions; when the first parking position is on the unique arrival route to the third parking position, determining an empty parking position in a third set of parking positions as a buffering parking position, the parking positions in the third set of parking positions being out of arrival routes to the parking positions in the first and second sets of parking positions; and sending a fourth instruction to the first vehicle instructing the first vehicle to move into the buffering parking position. Sending the first instruction to the first vehicle comprises: when detecting that a vehicle moves into the third parking position, sending the first instruction to the first vehicle.

According to a second aspect of the embodiments of the present invention, there is provided a vehicle control apparatus, according to claim 7, comprising: an information acquiring module configured to acquire position information and trip information of at least one vehicle including a first vehicle which has entered or is to enter a parking state, the first vehicle being an unmanned vehicle, and the trip information including a booked departure time and optionally at least one of a real-time navigation route and a booked navigation route; a first position determining module configured to determine a first parking position of the first vehicle based on the position information and the trip information of the at least one vehicle acquired by the information acquiring module; and a first sending module configured to send a first instruction to the first vehicle instructing the first vehicle to move into the first parking position determined by the first position determining module. The first position determining module comprises: a fourth determining sub-module configured to, when the booked departure time of the first vehicle is not later than a designated time point, determine an empty parking position in a first set of parking positions as the first parking position; a fifth determining sub-module configured to, when the booked departure time of the first vehicle is later than the designated time point, determine an empty parking position in a second set of parking positions as the first parking position. For any parking position in the first set of parking positions, the parking position is on a departure route from at least one parking position in the second set of parking positions.

Optionally, the at least one vehicle includes a second vehicle which has entered the parking state, and the trip information includes the booked departure time and the booked navigation route. The first position determining module comprises: a first determining sub-module configured to, when the booked departure time of the first vehicle is later than that of the second vehicle and the first vehicle is on the booked navigation route of the second vehicle, determine the first parking position of the first vehicle based on the position information of the first vehicle and the booked navigation route of the second vehicle, the first parking position being out of the booked navigation route of the second vehicle; or a second determining sub-module configured to, when the booked departure time of the first vehicle is null, the booked departure time of the second vehicle is not null, and the first vehicle is on the booked navigation route of the second vehicle, determine the first parking position of the first vehicle based on the position information of the first vehicle and the booked navigation route of the second vehicle, the first parking position being out of the booked navigation route of the second vehicle.

Optionally, the first parking position is a current position of the second vehicle. The apparatus further comprises: a second position determining module configured to determine a second parking position of the second vehicle, the second parking position being an original position where the first vehicle is located before receiving the first instruction; and a second sending module configured to send a second instruction to the second vehicle instructing the second vehicle to move into the second parking position.

Optionally, the at least one vehicle includes a second vehicle which is in a moving state, and the trip information of the second vehicle includes a real-time navigation route of the second vehicle. The first position determining module comprises: a third determining sub-module configured to, when the first vehicle is on the real-time navigation route of the second vehicle, determine the first parking position of the first vehicle based on the position information of the first vehicle and the real-time navigation route of the second vehicle, the first parking position being out of the real-time navigation route of the second vehicle.

Optionally, the apparatus further comprises: a third sending module configured to, when the second vehicle passes an original position where the first vehicle is located before receiving the first instruction, send a third instruction to the first vehicle instructing the first vehicle to return to the original position.

Optionally, the apparatus further comprises: a detecting module configured to, when the first parking position is the empty parking position in the first set of parking positions, detect, before the first sending module sends the first instruction to the first vehicle, whether the first parking position is on a unique arrival route to a third parking position, which is an empty parking position in the second set of parking positions; a third position determining module configured to, when the detecting module detects that the first parking position is on the unique arrival route to the third parking position, determine an empty parking position in a third set of parking positions as a buffering parking position, the parking positions in the third set of parking positions being out of arrival routes to the parking positions in the first and second sets of parking positions; and a fourth sending module configured to send a fourth instruction to the first vehicle instructing the first vehicle to move into the buffering parking position. The first sending module is configured to, when it is detected that a vehicle moves into the third parking position, send the first instruction to the first vehicle.

According to further aspects of the embodiments of the present invention, there is provided a corresponding vehicle control apparatus, comprising: a processor; and a memory configured to store instructions executable by the processor; a computer program, and a recording medium. This program can use any programming language and take the form of source code, object code or a code intermediate between source code and object code, such as a partially compiled form, or any other desirable form.

The invention is also directed to a computer-readable information recording medium, according to claim 15, containing instructions of a computer program, according to claim 14.

The information recording medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information recording medium can be an integrated circuit in which the program is incorporated, the circuit being adapted to execute the method in question or to be used in its execution.

The technical solutions provided by the embodiments of the present invention may produce the following advantageous effect. By acquiring position information and trip information of at least one vehicle, determining a first parking position of a first vehicle based on the position information and the trip information of the at least one vehicle, and sending a first instruction to the first vehicle instructing the first vehicle to move into the first parking position, a parking position of a vehicle to be controlled can be determined based on trip information of the vehicle to be controlled and of its surrounding vehicles during a process of automatically controlling vehicle parking, thereby preventing the vehicle to be controlled from blocking moving routes of its surrounding vehicles and hence optimizing the parking result.

It should be understood that both the foregoing general description and the following detailed description are only exemplary and explanatory and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of a relevant implementation environment according to an exemplary embodiment of this invention.
Fig. 2 is a flow chart showing a vehicle control method according to an exemplary embodiment.
Fig. 3 is a flow chart showing a vehicle control method according to another exemplary embodiment.
Fig. 4 is a flow chart showing a vehicle control method according to yet another exemplary embodiment.
Figs. 5-6 are schematic diagrams of two parking manners relevant to the exemplary embodiment corresponding to Fig. 4.
Fig. 7 a flow chart showing a vehicle control method according to yet another exemplary embodiment.
Figs. 8-9 are schematic diagrams showing two parking position exchanging manners relevant to the exemplary embodiment corresponding to Fig. 7.
Fig. 10 a flow chart showing a vehicle control method according to yet another exemplary embodiment.
Fig. 11 is a schematic diagram showing a parking position scheduling manner relevant to the exemplary embodiment corresponding to Fig. 10.
Fig. 12 is a block diagram illustrating a vehicle control apparatus according to an exemplary embodiment.
Fig. 13 is a block diagram illustrating a vehicle control apparatus according to another exemplary embodiment.
Fig. 14 is a block diagram illustrating a vehicle control apparatus according to yet another exemplary embodiment.
Fig. 15 is a block diagram illustrating a vehicle control apparatus according to yet another exemplary embodiment.
Fig. 16 is a block diagram illustrating an apparatus according to an exemplary embodiment.

The above drawings illustrate specific embodiments of this invention, which will be described in detail in the following. These drawings and literal descriptions are not intended to limit the scope of the concept of this invention by any means, but to explain the concept of this invention to those skilled in the art with reference to the specific embodiments.

### DETAILED DESCRIPTION OF EXAMPLE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

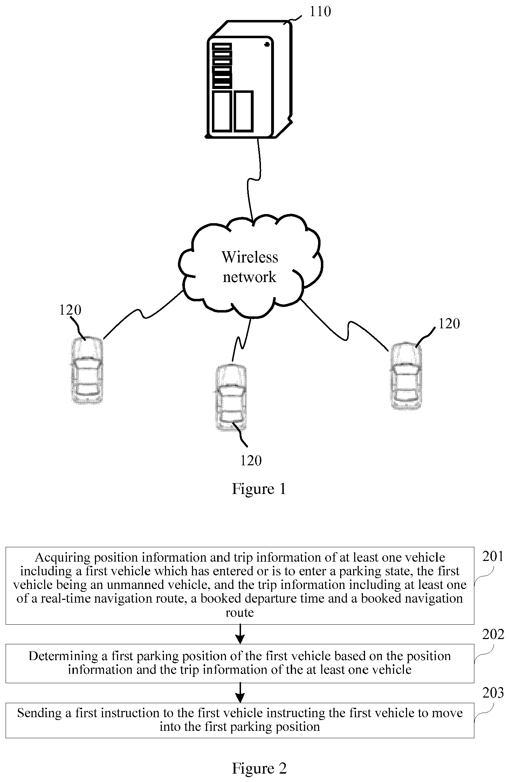

Fig. 1 is a schematic diagram of an implementation environment relevant to a vehicle control method according to an embodiment of this invention. The implementation environment may include a server 110 and at least one vehicle 120.

The server 110 may be a standalone server, or a server cluster composed of multiple servers for realizing different functions respectively. The server 110 may also be a cloud computing center.

The at least one vehicle 120 may be a vehicle having a positioning function and an automatic driving function. For example, the at least one vehicle 120 may be a vehicle provided with a satellite positioning module or a wireless positioning module and with an automatic driving system.

The at least one vehicle 120 may further have a wireless communication function. For example, the at least one vehicle 120 may include a wireless communication module supporting 3G/4G wireless communication technologies, through which data exchange may be performed between the vehicle 120 and the server 110.

Fig. 2 is a flow chart showing a vehicle control method according to an exemplary embodiment. The method may be used in the server 110 of the implementation environment shown in Fig. 1, and may comprise the following steps.

In step 201, position information and trip information of at least one vehicle including a first vehicle which has entered or is to enter a parking state are acquired, the first vehicle being an unmanned vehicle, and the trip information including a booked departure time and optionally at least one of a real-time navigation route and a booked navigation route.

In step 202, a first parking position of the first vehicle is determined based on the position information and the trip information of the at least one vehicle.

In step 203, a first instruction is sent to the first vehicle, instructing the first vehicle to move into the first parking position.

To sum up, according to the vehicle control method provided by this embodiment, by acquiring position information and trip information of at least one vehicle, determining a first parking position of a first vehicle based on the position information and the trip information of the at least one vehicle, and sending a first instruction to the first vehicle instructing the first vehicle to move into the first parking position, a parking position of a vehicle to be controlled can be determined based on trip information of the vehicle to be controlled and of its surrounding vehicles during a process of automatically controlling vehicle parking, thereby preventing the vehicle to be controlled from blocking moving routes of its surrounding vehicles and hence optimizing the parking result.

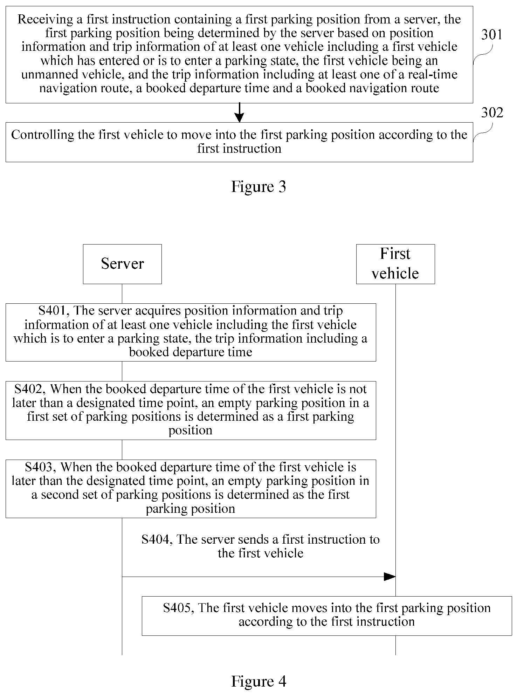

Fig. 3 is a flow chart showing a vehicle control method according to another exemplary embodiment. The method may be used in the vehicle 120 of the implementation environment shown in Fig. 1, and may comprise the following steps.

In step 301, a first instruction containing a first parking position is received from a server, the first parking position being determined by the server based on position information and trip information of at least one vehicle including a first vehicle which has entered or is to enter a parking state, the first vehicle being an unmanned vehicle, and the trip information including a booked departure time and optionally at least one of a real-time navigation route and a booked navigation route; and

In step 302, the first vehicle is controlled to move into the first parking position according to the first instruction.

To sum up, according to the vehicle control method provided by this embodiment, by receiving a first instruction sent by a server after a first parking position is determined by the server based on position information and trip information of at least one vehicle, and controlling the first vehicle to move into the first parking position, a parking position of a vehicle to be controlled can be determined based on trip information of the vehicle to be controlled and of its surrounding vehicles during a process of automatically controlling vehicle parking, thereby preventing the vehicle to be controlled from blocking moving routes of its surrounding vehicles and hence optimizing the parking result.

The methods provided by the above embodiments may be applied to the following three scenarios.
Scenario 1: In a parking lot, a server controls individual vehicles and arranges them at parking positions convenient for departure, based on a chronological order of the booked departure times of the vehicles.
Scenario 2: When the departure route of a vehicle preparing to depart from its parking position is blocked by another vehicle, the server controls the blocking vehicle to give way for the obstructed vehicle to depart.
Scenario 3: When a moving route of a moving vehicle is blocked by another vehicle, the server controls the blocking vehicle to give way for the obstructed vehicle to pass.

The following embodiments will illustrate the above scenarios.

Fig. 4 is a flow chart showing a vehicle control method according to yet another embodiment. The method may be used in the implementation environment shown in Fig. 1. Taking an example where it is applied to the above Scenario 1, the method may comprise the following steps S401-S405.

In step S401, a server acquires position information and trip information of at least one vehicle including a first vehicle which is to enter a parking state, the trip information including a booked departure time.

Optionally, the at least one vehicle may include all vehicles within a certain area, or all vehicles within a preset range surrounding the first vehicle, or all vehicles within a preset range surrounding the first vehicle which meet a preset condition. For example, the preset condition may be that a vehicle has not been scheduled by the server or a vehicle has not been scheduled to a designated area by the server.

In an embodiment of this invention, the satellite positioning module or wireless positioning module built in the vehicle may position the vehicle in real time, and report the position of the vehicle to the server. In addition, the control system of the vehicle also acquires trip information of the vehicle and reports the same to the server. The trip information may include a booked trip for the vehicle, which includes a booked departure time (i.e., a time when the vehicle is expected to leave its current position). The booked trip may be set in the vehicle or in a user terminal by the vehicle owner in advance.

Optionally, the booked trip may also include other contents, such as a destination or a navigation route to the destination.

In step S402, when the booked departure time of the first vehicle is not later than a designated time point, an empty parking position in a first set of parking positions is determined as a first parking position.

The designated time point may be a fixed time point set by the server in advance. For example, the designated time point may be fixed to 12:00 at noon. Alternatively, it may be a time point calculated and updated in real time by the server based on the current time. For example, the designated time point may be a time point 6 hours after the current time. If the current time is 8:00 AM, then the designated time point will be 2:00 PM.

In step S403, when the booked departure time of the first vehicle is later than the designated time point, an empty parking position in a second set of parking positions is determined as the first parking position.

For any parking position in the first set of parking positions, the parking position is on a departure route from at least one parking position in the second set of parking positions.

In an embodiment of this invention, the server may manage all parking positions in an area. The parking positions may be close to one another, and some may be arranged on the departure routes from others. The server may divide the parking positions into at least two sets of parking positions based on relations among the parking positions. The departure routes of vehicles from the parking positions in a first set of parking positions pass a few or no other parking positions, while most of the departure routes of vehicles from the parking positions in a second set of parking positions pass many other parking positions. When the server arranges for the first vehicle which is to enter the parking state to move into a parking position, the parking position from the first or second set of parking positions may be selected based on the booked departure time set by the owner of the first vehicle in advance. For example, if the booked departure time of the first vehicle is relatively early (e.g., before 12:00 at noon), the server may select an empty parking position from the first set of parking positions as the first parking position of the first vehicle, so that the first vehicle can conveniently depart from the parking position when leaving early. If the booked departure time of the first vehicle is relatively late (e.g., after 12:00 at noon), the server may select an empty parking position from the second set of parking positions as the first parking position of the first vehicle, so that the first vehicle leaving late will not block the departure routes of other vehicles leaving earlier.

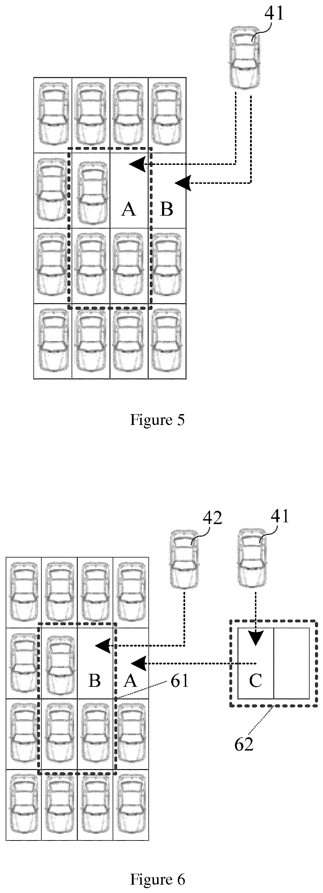

In a possible implementation, referring to a parking manner schematically shown in Fig. 5, there are 16 parking positions in a parking area. Among these parking positions, 4 in the middle (those in the bold and dotted block 51 in Fig. 5) belong to the second set of parking positions, and the remaining 12 belong to the first set of parking positions. When a vehicle 41 enters a to-be-parked state, the server can acquire the booked departure time of the booked trip for the vehicle 41, and determine to which parking position the vehicle 41 will be scheduled based on the booked departure time. For example, supposing the designated time point is 12:00 AM, if the booked departure time of the vehicle 41 is 9:30 AM, the server may determine position A in the first set of parking positions as the first parking position of the vehicle 41; if the booked departure time of the vehicle 41 is 17:30 PM, the server may determine position B in the second set of parking positions as the first parking position of the vehicle 41. That is, a vehicle having a relatively later booked departure time can be scheduled to a parking position at an inner side, and a vehicle having a relatively earlier booked departure time can be scheduled to a parking position at an outer side, so that the vehicle parked at the outer side has left before the vehicle parked at the inner side departs, thereby avoiding obstructing the vehicles parked at the inner side, reducing the possibility of scheduling the vehicles parked at the outer side when the vehicles parked at the inner side depart, and reducing unnecessary vehicle scheduling.

In step S404, the server sends a first instruction to the first vehicle.

The server may send the first instruction to the first vehicle through a wireless network connection between the server and the first vehicle, the first instruction including the first parking position determined in the above step.

In step S405, the first vehicle moves into the first parking position according to the first instruction.

Optionally, after the wireless communication module of the first vehicle receives the first instruction from the server, the automatic driving system of the first vehicle may control the first vehicle to move into the first parking position according to the first instruction.

For example, the automatic driving system of the first vehicle may automatically calculate a navigation route from the current position of the first vehicle to the first parking position based on the first parking position, and control the first vehicle to move into the first parking position along the navigation route.

Optionally, the server may calculate a navigation route from the first vehicle to the first parking position based on the first parking position and the position information of the first vehicle, add the navigation route as well as the first parking position into the first instruction and send the first instruction to the first vehicle. Then, the automatic driving system of the first vehicle controls the first vehicle to move into the first parking position directly according to the navigation route carried in the first instruction.

Optionally, in an embodiment of this invention, when the first parking position is an empty parking position in the first set of parking positions, the server may detect whether the first parking position is on a unique arrival route to a third parking position, which is an empty parking position in the second set of parking positions. When the first parking position is on the unique arrival route to the third parking position, the server determines an empty parking position in a third set of parking positions as a buffering parking position, the parking positions in the third set of parking positions being out of arrival routes to the parking positions in the first and second sets of parking positions. Then, the server sends a fourth instruction to the first vehicle instructing the first vehicle to move into the buffering parking position. When detecting that a vehicle moves into the third parking position, the server sends the first instruction to the first vehicle.

For example, referring to another parking manner schematically shown in Fig. 6, a parking area is divided into two parts. The left part of the parking area is the main parking area having a lot of parking positions. As shown, there are 16 parking positions in the main parking area. Among the 16 parking positions, 4 in the middle (those in the bold and dotted block 61 in Fig. 6) belong to the second set of parking positions, and the remaining 12 belong to the first set of parking positions. The left part of the parking area is a buffering area having a few parking positions. The two parking positions in the buffering area (those in the bold and dotted block 62 in Fig. 6) belong to the third set of parking positions. A vehicle 41 enters a to-be-parked state earlier than a vehicle 42. The server acquires the booked departure time of the booked trip for the vehicle 41 as 9:30 AM, and determines position A as the first parking position of the vehicle 41 based on the booked departure time. At this time, position B is not occupied, and the server detects that the position A is on the unique arrival route to the position B. If the vehicle 41 is parked at the position A, vehicles parked later cannot move into the position B. In this case, the server may first determine a currently available buffering position in the left buffering area (namely, position C in Fig. 6) and instruct the vehicle 41 to move into the position C first. Then, the vehicle 42 enters the parking state. The server acquires the booked departure time of the booked trip for the vehicle 42 as 17:30 PM, determines the position B as the parking position of the vehicle 42 based on the booked departure time, and instructs the vehicle 42 to move into the position B. After detecting that the vehicle 42 has moved into the position B, the server instructs the vehicle 41 to move into the position A. In this way, a vehicle having a relatively later booked departure time can be scheduled to a parking position at an inner side, and a vehicle having a relatively earlier booked departure time can be scheduled to a parking position at an outer side, so that the vehicle parked at the outer side has left before the vehicle parked at the inner side departs, thereby avoiding obstructing the vehicles parked at the inner side. Meanwhile, a buffering area is provided for temporarily parking a vehicle that is parked and leaves early, thereby preventing the vehicle that is parked and leaves early from blocking the route for a vehicle that is parked and leaves late to move into a parking position, reducing the possibility of scheduling the vehicles parked at the outer side when vehicles move into parking positions at the inner side, and reducing unnecessary vehicle scheduling.

To sum up, according to the vehicle control method provided by this embodiment, by acquiring position information and a booked departure time of at least one vehicle, determining a first parking position of a first vehicle based on the position information and the booked departure time of the at least one vehicle, and sending a first instruction to the first vehicle instructing the first vehicle to move into the first parking position, a vehicle having a relatively later booked departure time can be scheduled to a parking position at an inner side and a vehicle having a relatively earlier booked departure time can be scheduled to a parking position at an outer side during a process of automatically controlling vehicle parking, so that the vehicle parked at the outer side has left before the vehicle parked at the inner side departs, thereby avoiding obstructing the vehicles parked at the inner side, reducing the possibility of scheduling the vehicles parked at the outer side when the vehicles parked at the inner side depart, reducing unnecessary vehicle scheduling and optimizing the parking result.

In addition, according to the vehicle control method provided by this embodiment, before sending the first instruction to the first vehicle, the server further detects whether the first parking position is on a unique arrival route to another available parking position. If yes, the server sends a fourth instruction to the first vehicle instructing the first vehicle to move into a buffering parking position. When detecting that a vehicle moves into the other available parking position, the server sends the first instruction to the first vehicle. In this way, a vehicle that is parked and leaves early is prevented from blocking the route for a vehicle that is parked and leaves late to move into a parking position, reducing the possibility of scheduling the vehicles parked at the outer side when vehicles move into parking positions at the inner side depart, and reducing scheduling during automatic control of parking.

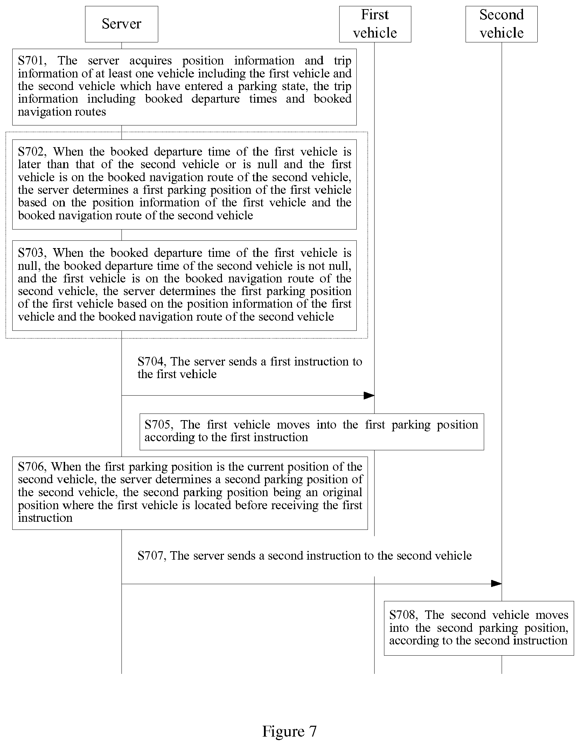

Fig. 7 is a flow chart showing a vehicle control method according to yet another embodiment. The method may be used in the implementation environment shown in Fig. 1. Taking an example where it is applied to the above Scenario 2, the method may comprise the following steps S701-S708.

In step S701, a server acquires position information and trip information of at least one vehicle including a first vehicle and a second vehicle which have entered a parking state, the trip information including booked departure times and booked navigation routes.

Reference can be made to the above descriptions regarding step S401 for the process of acquiring the position information and the trip information of the at least one vehicle by the server, which will not be described here redundantly.

In an embodiment of the present invention, the at least one vehicle includes at least two vehicles (namely, a first vehicle and a second vehicle) which have entered the parking state. The server acquires the position information and the trip information of each of the first and second vehicles. The trip information may also indicate a booked navigation route of the vehicle in addition to a booked departure time. The navigation route may be a navigation route along which the vehicle moves to a specific destination or a navigation route along which the vehicle leaves its current parking position. When the navigation route is a navigation route along which the vehicle moves to a specific destination, the navigation route may be a navigation route set by the vehicle owner in his/her vehicle or in a user terminal. Alternatively, the vehicle owner may set a destination in his/her vehicle or in a user terminal, and the server may calculate a navigation route based on the destination and the position information of the vehicle. When the navigation route is a navigation route along which the vehicle leaves its current parking position, the navigation route may be a navigation route calculated by the server based on the position information of the vehicle and a road environment surrounding the vehicle. Even if the vehicle owner does not set a booked departure time or a booked navigation route, the server may acquire the trip information of the vehicle, except that the booked departure time or booked navigation route in the trip information is null.

In step S702, when the booked departure time of the first vehicle is later than that of the second vehicle or is null and the first vehicle is on the booked navigation route of the second vehicle, the server determines a first parking position of the first vehicle based on the position information of the first vehicle and the booked navigation route of the second vehicle.

In step S703, when the booked departure time of the first vehicle is null, the booked departure time of the second vehicle is not null, and the first vehicle is on the booked navigation route of the second vehicle, the server determines the first parking position of the first vehicle based on the position information of the first vehicle and the booked navigation route of the second vehicle.

The first parking position is out of the booked navigation route of the second vehicle.

When the trip information of the second vehicle acquired by the server includes the booked navigation route of the second vehicle, the server may detect whether the first vehicle is on the booked navigation route of the second vehicle. If yes, the server further acquires the booked departure times in the trip information of the first and second vehicles. If the booked departure time of the first vehicle is null and the booked departure time of the second vehicle is not null, it indicates that the owner of the first vehicle may not set the booked departure time. Then, the server may consider by default that the booked departure time of the first vehicle is later than that of the second vehicle, and determine the first parking position of the first vehicle to preferentially guarantee that the booked navigation route of the second vehicle is not blocked. If the booked departure time of neither the first nor the second vehicle is null, the server detects whether the booked departure time of the first vehicle is later than that of the second vehicle. If yes, it indicates that the second vehicle will be obstructed by the first vehicle when the second vehicle moves along its booked navigation route at its booked departure time. Then, the server determines the first parking position of the first vehicle to preferentially guarantee that the booked navigation route of the second vehicle is not blocked.

In step S704, the server sends a first instruction to the first vehicle.

The server may send the first instruction to the first vehicle through a wireless network connection between the server and the first vehicle, the first instruction including the first parking position determined in the above step.

Optionally, if the booked departure time in the trip information of the first vehicle acquired by the server in step S402 is null, the server cannot determine that the departure time of the first vehicle must be later than that of the second vehicle. If the first vehicle departs before the booked departure time of the second vehicle, the server does not need to move the first vehicle. Therefore, if the booked departure time in the trip information of the first vehicle is null, the server may send the first instruction at a predetermined time point before the booked departure time of the second vehicle arrives. For example, the server may send the first instruction to the first vehicle 5 minutes before the booked departure time of the second vehicle arrives. If the booked departure time in the trip information of the first vehicle acquired by the server in step S402 is not null, the server may send the first instruction to the first vehicle immediately or at a predetermined time point before the booked departure time of the second vehicle arrives.

In step S705, the first vehicle moves into the first parking position according to the first instruction.

Reference can be made to the above descriptions regarding step S404 for details of step S705, which will not be described here redundantly.

In step S706, when the first parking position is the current position of the second vehicle, the server determines a second parking position of the second vehicle, the second parking position being an original position where the first vehicle is located before receiving the first instruction.

In step S707, the server sends a second instruction to the second vehicle.

The second instruction is used to instruct the second vehicle to move into the second parking position.

In an embodiment of the present invention, the first and second vehicles are very close to each other. For example, if the first vehicle is currently right in front of and obstructing the second vehicle, the server may schedule the first and second vehicles to exchange their parking positions, so that the second vehicle when departing can directly leave without being obstructed. Meanwhile, this guarantees that the first vehicle can park at a nearby position, making it convenient for the owner of the first vehicle to find his/her vehicle later.

In step S708, the second vehicle moves into the second parking position according to the second instruction.

The automatic driving system of the second vehicle may automatically control the second vehicle to move into the second parking position according to the second instruction.

The server may schedule the first and second vehicles to exchange their parking positions using the first and second instructions. For example, the server may instruct the first vehicle to first move into a temporary parking position using the first and second instructions, the temporary parking position being an available parking position out of a route for the second vehicle to move to the original position where the first vehicle is located before receiving the first instruction. Then, the server instructs the second vehicle to move into the original position where the first vehicle is located before receiving the first instruction (namely, the second parking position). Finally, the server instructs the first vehicle to move from the temporary parking position to the first parking position, which is the original position where the second vehicle is located before receiving the second instruction.

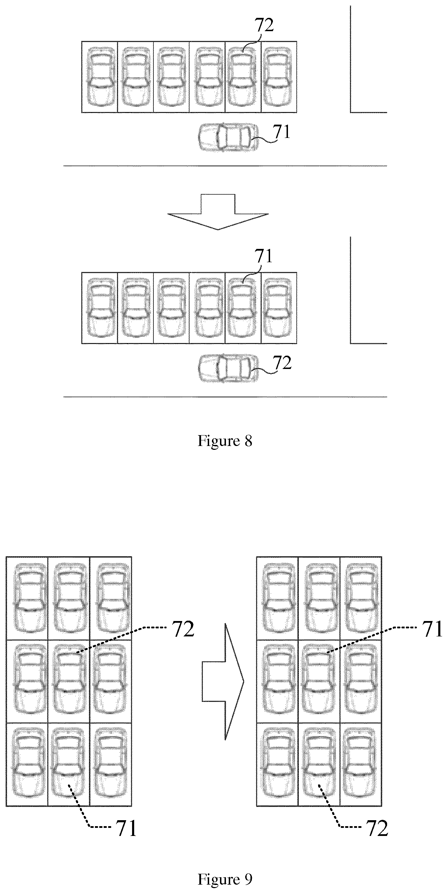

For example, refer to Fig. 8, which is a schematic diagram showing exchange of parking positions. A parking area is close to a road side. A vehicle 71 and a vehicle 72 are respectively parked at the road side and at a parking position. The vehicle 71 blocks the departure route of the vehicle 72. After acquiring position information and trip information of the vehicles 71 and 72, the server determines that the vehicle 71 blocks the departure route of the vehicle 72, and compares the booked departure times of the vehicles 71 and 72. If the booked departure time of the vehicle 71 is later than that of the vehicle 72, or if the booked departure time of the vehicle 71 is null and the booked departure time of the vehicle 72 is not null, the server may send instructions to the vehicles 71 and 72 respectively 5 minutes before the booked departure time of the vehicle 72 arrives, to control the vehicles 71 and 72 to exchange their parking positions.

For example, refer to Fig. 9, which is another schematic diagram showing exchange of parking positions. A parking area is an array of 3^{∗}3 parking position. A vehicle 72 is parked at the middle parking position, and a vehicle 71 is parked at a parking position in front of the vehicle 72. The vehicle 71 blocks the departure route of the vehicle 72. After acquiring position information and trip information of the vehicles 71 and 72, the server determines that the vehicle 71 blocks the departure route of the vehicle 72, and compares the booked departure times of the vehicles 71 and 72. If the booked departure time of the vehicle 71 is later than that of the vehicle 72, or if the booked departure time of the vehicle 71 is null and the booked departure time of the vehicle 72 is not null, the server may send instructions respectively to the vehicles 71 and 72 immediately or 5 minutes before the booked departure time of the vehicle 72 arrives, to control the vehicles 71 and 72 to exchange their parking positions.

To sum up, according to the vehicle control method provided by this embodiment of this invention, by acquiring position information, booked departure times and booked navigation routes of at least one vehicle, determining a first parking position of a first vehicle based on the position information, the booked departure times and the booked navigation routes of the at least one vehicle, and sending a first instruction to the first vehicle instructing the first vehicle to move into the first parking position, the first vehicle is automatically controlled to move out of booked navigation routes of other vehicles before the booked departure times of the other vehicles obstructed by the first vehicle arrive, so that the other vehicles when departing can leave their parking positions without being obstructed, thereby optimizing the parking result.

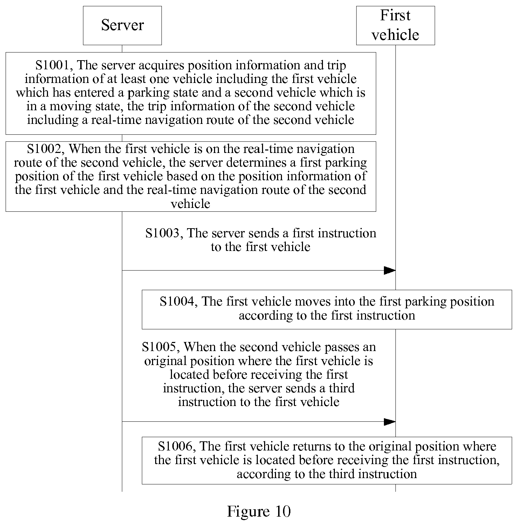

Fig. 10 a flow chart showing a vehicle control method according to yet another embodiment. The method may be used in the implementation environment shown in Fig. 1. Taking an example where it is applied to the above Scenario 3, the method may comprise the following steps S1001-S1006.

In step S1001, a server acquires position information and trip information of at least one vehicle including a first vehicle which has entered a parking state and a second vehicle which is in a moving state, the trip information of the second vehicle including a real-time navigation route of the second vehicle.

Reference can be made to the above descriptions regarding step S401 for the process of acquiring the position information and the trip information of the at least one vehicle by the server, which will not be described here redundantly.

In an embodiment of the present invention, the at least one vehicle includes both a first vehicle which is in a parking state and a second vehicle which is in a moving state. The server acquires position information and trip information of the first and second vehicles. Because the first vehicle is in the parking state, the trip information of the first vehicle may be a booked trip including a booked departure time and a booked navigation route of the first vehicle. Because the second vehicle is in the moving state, the trip information of the second vehicle may be a current navigation route of the second vehicle.

In step S1002, when the first vehicle is on the real-time navigation route of the second vehicle, the server determines a first parking position of the first vehicle based on the position information of the first vehicle and the real-time navigation route of the second vehicle.

The first parking position is out of the real-time navigation route of the second vehicle.

After acquiring the real-time navigation route of the second vehicle, if the server determines that the first vehicle is on the real-time navigation route of the second vehicle, the server may schedule the first vehicle by determining for the first vehicle the first parking position, which is out of the real-time navigation route of the second vehicle, to prevent the first vehicle from blocking the moving route of the second vehicle.

Optionally, in a possible implementation, if the booked departure time of the first vehicle in the trip information of the first vehicle acquired by the server is not null, the server may calculate a time required for the second vehicle to arrive at the current position of the first vehicle based on the position information of the first and second vehicles and the real-time navigation route of the second vehicle, and detect whether the time required for the second vehicle to arrive at the current position of the first vehicle is earlier than the booked departure time of the second vehicle. If yes, the server determines the first parking position of the first vehicle based on the position information of the first vehicle and the real-time navigation route of the second vehicle. If the booked departure time of the first vehicle in the trip information of the first vehicle acquired by the server is null, the server considers by default that the first vehicle has not yet left when the time required for the second vehicle to arrive at the current position of the first vehicle passes. At this time, the server also needs to determine the first parking position of the first vehicle.

In an embodiment of this invention, if the second vehicle is still far from the first vehicle, the first vehicle may have left when the second vehicle arrives at the current position of the first vehicle. At this time, if the server can acquire the trip information of the first vehicle and the trip information of the first vehicle includes the booked departure time of the first vehicle, the server may estimate whether the first vehicle has left when the second vehicle arrives at the current position of the first vehicle. If yes, the server does not need to determine the first parking position of the first vehicle. If no, the server needs to determine the first parking position of the first vehicle to preferentially guarantee that the real-time navigation route of the second vehicle is not blocked.

Optionally, in another possible implementation, if the second vehicle is still far from the first vehicle, it cannot be determined at present whether the first vehicle still blocks the real-time navigation route of the second vehicle when the second vehicle arrives at the current position of the first vehicle. Therefore, in an embodiment of this invention, before performing the above step S1002, the server first detects whether a distance between the first and second vehicles is smaller than a preset distance threshold. If yes, the step S1002 is performed immediately. If no, after the distance between the first and second vehicles is smaller than the preset distance threshold, the step 1002 is performed.

In step S1003, the server sends a first instruction to the first vehicle.

The server may send the first instruction to the first vehicle through a wireless network connection between the server and the first vehicle, the first instruction including the first parking position determined in the above step.

In step S1004, the first vehicle moves into the first parking position according to the first instruction.

Reference can be made to the above description regarding step S404 for details of step S1004, which will not be described here redundantly.

In step S1005, when the second vehicle passes an original position where the first vehicle is located before receiving the first instruction, the server sends a third instruction to the first vehicle.

The third instruction is used for instructing the first vehicle to return to the original position where the first vehicle is located before receiving the first instruction.

In step S1006, the first vehicle returns to the original position where the first vehicle is located before receiving the first instruction, according to the third instruction.

To avoid a case where the owner of the first vehicle can't find the first vehicle after the first vehicle moves into the first parking position, the server may instruct the first vehicle to return to its original position when the second vehicle passes an original position where the first vehicle is located before receiving the first instruction. The automatic driving system of the first vehicle may automatically control the first vehicle to return to its original position, according to the third instruction.

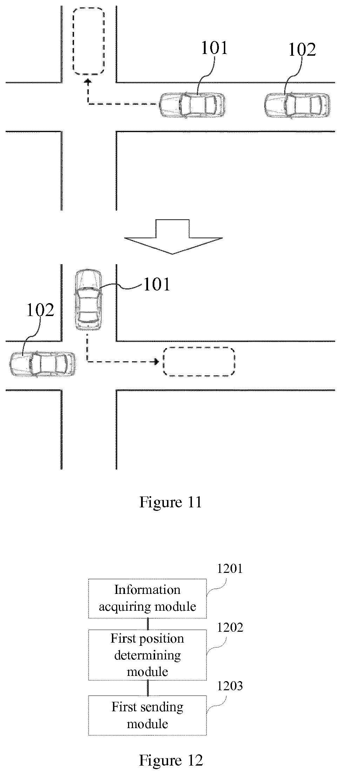

For example, refer to Fig. 11, which is a schematic diagram showing scheduling of parking position. A vehicle 101 is parked in the middle of a road. After the server detects that the vehicle 101 blocks the real-time navigation route of a vehicle 102, the server determines a position E, which is out of the real-time navigation route of the vehicle 102, as the first parking position of the vehicle 101, and sends the first instruction to the vehicle 101. The automatic driving system of the vehicle 101 controls the vehicle 101 to move into the position E. After the vehicle 102 passes, the server sends the third instruction to the vehicle 101. Then, the automatic driving system of the vehicle 101 controls the vehicle 101 to return to its original position.

Optionally, in an embodiment of this invention, when the first vehicle blocks the real-time navigation route of the second vehicle, the first and second vehicles may directly perform information exchange and position scheduling therebetween. For example, when detecting a give-way request sent by the second vehicle, the automatic driving system of the first vehicle may query an available parking position within a preset range which is out of a route for the second vehicle to move to the current position of the first vehicle. After the available parking position is queried, the automatic driving system of the first vehicle controls the first vehicle to move into the available parking position. Before querying an available parking position within the preset range, the automatic driving system of the first vehicle, when detecting the give-way request sent by the second vehicle, may receive the give-way request sent by the second vehicle via short range wireless communications or detect the give-way request sent by the second vehicle via an acoustic and optical signal.

Optionally, when the second vehicle passes the original position where the first vehicle is located before receiving the give-way request, the first vehicle may return to the original position where the first vehicle is located before receiving the give-way request.

For example, taking Fig. 11 as an example, if the vehicle 102 when moving detects that the vehicle 101 blocks its moving route, it may send a give-way request to the vehicle 101 via short range wireless communications or via a predetermined manner, such as flashing lights (flashing the headlights 5 times successively, for example) or honking (5 times sucessively, for example). After receiving the give-way request sent by the vehicle 102 via short range wireless communications or via a predetermined manner (such as flashing the headlights or honking), the vehicle 101 may automatically query an available parking position within a preset surrounding range. For example, an available parking position may be queried by analyzing images captured by cameras mounted around the vehicle 101, and the vehicle 101 may automatically move into the available parking position. After the vehicle 102 passes, the vehicle 101 automatically returns to its original position.

To sum up, according to the vehicle control method provided by this embodiment, the server acquires the real-time navigation route of the second vehicle which is in the moving state. When the first vehicle in the parking state is on the real-time navigation route of the second vehicle, the server determines the first parking position of the first vehicle based on the position information of the first vehicle and the real-time navigation route of the second vehicle, and sends a first instruction to the first vehicle instructing the first vehicle to move into the first parking position. In this way, if the first vehicle blocks the moving route of another vehicle that is moving, the first vehicle is automatically controlled to move out of the moving route of the other vehicle to allow the other vehicle to pass, thereby optimizing the parking result.

The followings describe apparatus embodiments of this invention, which may be used to perform the method embodiments of this invention. For details not disclosed in the apparatus embodiments of this invention, reference can be made to the method embodiments of this invention.

Fig. 12 is a block diagram illustrating a vehicle control apparatus according to an exemplary embodiment. The vehicle control apparatus is used for scheduling a parking position of a vehicle, and may be implemented as the server 110 in the implementation environment shown in Fig. 1 or part of it through software, hardware or a combination thereof. The apparatus for scheduling the parking position of the vehicle may comprise: an information acquiring module 1201, a first position determining module 1202 and a first sending module 1203.

The information acquiring module 1201 is configured to acquire position information and trip information of at least one vehicle including a first vehicle which has entered or is to enter a parking state, the first vehicle being an unmanned vehicle, and the trip information including a booked departure time and optionally at least one of a real-time navigation route and a booked navigation route.

The first position determining module 1202 is configured to determine a first parking position of the first vehicle based on the position information and the trip information of the at least one vehicle acquired by the information acquiring module.

The first sending module 1203 is configured to send a first instruction to the first vehicle instructing the first vehicle to move into the first parking position determined by the first position determining module.

To sum up, according to the vehicle control apparatus provided by this embodiment, by acquiring position information and trip information of at least one vehicle, determining a first parking position of a first vehicle based on the position information and the trip information of the at least one vehicle, and sending a first instruction to the first vehicle instructing the first vehicle to move into the first parking position, a parking position of a vehicle to be controlled can be determined based on trip information of the vehicle to be controlled and of its surrounding vehicles during a process of automatically controlling the vehicle to park, thereby preventing the vehicle to be controlled from blocking moving routes of its surrounding vehicles and hence optimizing the parking result.

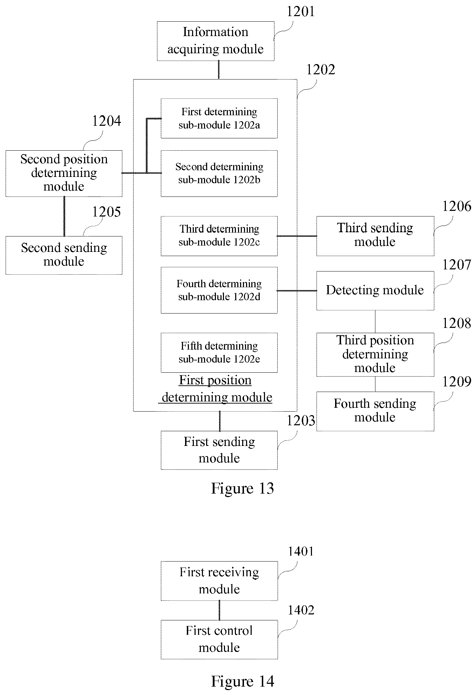

Fig. 13 is a block diagram illustrating a vehicle control apparatus according to another exemplary embodiment. The vehicle control apparatus is used for scheduling a parking position of a vehicle, and may be implemented as the server 110 in the implementation environment shown in Fig. 1 or part of it through software, hardware or a combination thereof. The apparatus for scheduling the parking position of the vehicle may comprise: an information acquiring module 1201, a first position determining module 1202 and a first sending module 1203.

The information acquiring module 1201 is configured to acquire position information and trip information of at least one vehicle including a first vehicle which has entered or is to enter a parking state, the first vehicle being an unmanned vehicle, and the trip information including a booked departure time and optionally at least one of a real-time navigation route and a booked navigation route

The first position determining module 1202 is configured to determine a first parking position of the first vehicle based on the position information and the trip information of the at least one vehicle acquired by the information acquiring module.

The first sending module 1203 is configured to send a first instruction to the first vehicle instructing the first vehicle to move into the first parking position determined by the first position determining module.

Optionally, the at least one vehicle includes a second vehicle which has entered the parking state, and the trip information includes the booked departure time and the booked navigation route. The first position determining module 1202 comprises: a first determining sub-module 1202a configured to, when the booked departure time of the first vehicle is later than that of the second vehicle and the first vehicle is on the booked navigation route of the second vehicle, determine the first parking position of the first vehicle based on the position information of the first vehicle and the booked navigation route of the second vehicle, the first parking position being out of the booked navigation route of the second vehicle; a second determining sub-module 1202b configured to, when the booked departure time of the first vehicle is null, the booked departure time of the second vehicle is not null, and the first vehicle is on the booked navigation route of the second vehicle, determine the first parking position of the first vehicle based on the position information of the first vehicle and the booked navigation route of the second vehicle, the first parking position being out of the booked navigation route of the second vehicle.

Optionally, the first parking position is a current position of the second vehicle. The apparatus further comprises: a second position determining module 1204 configured to determine a second parking position of the second vehicle, the second parking position being an original position where the first vehicle is located before receiving the first instruction; and a second sending module 1205 configured to send a second instruction to the second vehicle instructing the second vehicle to move into the second parking position.

Optionally, the at least one vehicle includes a second vehicle which is in a moving state, and the trip information of the second vehicle includes a real-time navigation route of the second vehicle. The first position determining module 1202 comprises: a third determining sub-module 1202c configured to, when the first vehicle is on the real-time navigation route of the second vehicle, determine the first parking position of the first vehicle based on the position information of the first vehicle and the real-time navigation route of the second vehicle, the first parking position being out of the real-time navigation route of the second vehicle.

Optionally, the apparatus further comprises: a third sending module 1206 configured to, when the second vehicle passes an original position where the first vehicle is located before receiving the first instruction, send a third instruction to the first vehicle instructing the first vehicle to return to the original position.

The trip information includes the booked departure time. The first position determining module 1202 comprises: a fourth determining sub-module 1202d configured to, when the booked departure time of the first vehicle is not later than a designated time point, determine an empty parking position in a first set of parking positions as the first parking position; a fifth determining sub-module 1202e configured to, when the booked departure time of the first vehicle is later than the designated time point, determine an empty parking position in a second set of parking positions as the first parking position. For any parking position in the first set of parking positions, the parking position is on a departure route from at least one parking position in the second set of parking positions.

Optionally, the apparatus further comprises: a detecting module 1207 configured to, when the first parking position is the empty parking position in the first set of parking positions, detect, before the first sending module sends the first instruction to the first vehicle, whether the first parking position is on a unique arrival route to a third parking position, which is an empty parking position in the second set of parking positions; a third position determining module 1208 configured to, when the detecting module 1207 detects that the first parking position is on the unique arrival route to the third parking position, determine an empty parking position in a third set of parking positions as a buffering parking position, the parking positions in the third set of parking positions being out of the arrival routes to the parking positions in the first and second sets of parking positions; and a fourth sending module 1209 configured to send a fourth instruction to the first vehicle instructing the first vehicle to move into the buffering parking position. The first sending module 1203 is configured to, when it is detected that a vehicle moves into the third parking position, send the first instruction to the first vehicle.

To sum up, according to the vehicle control apparatus provided by this embodiment, by acquiring position information and a booked departure time of at least one vehicle, determining a first parking position of a first vehicle based on the position information and the booked departure time of the at least one vehicle, and sending a first instruction to the first vehicle instructing the first vehicle to move into the first parking position, a server can schedule a vehicle having a relatively later booked departure time to a parking position at an inner side and schedule a vehicle having a relatively earlier booked departure time to a parking position at an outer side during a process of automatically controlling vehicle parking, so that the vehicle parked at the outer side has left before the vehicle parked at the inner side departs, thereby avoiding obstructing the vehicles parked at the inner side, reducing the possibility of scheduling the vehicles parked at the outer side when the vehicles parked at the inner side depart, reducing unnecessary vehicle scheduling and optimizing the parking result.

In addition, by acquiring position information, booked departure times and booked navigation routes of at least one vehicle, determining a first parking position of a first vehicle based on the position information, the booked departure times and the booked navigation routes of the at least one vehicle, and sending a first instruction to the first vehicle instructing the first vehicle to move into the first parking position, the server automatically controls the first vehicle to move out of the booked navigation routes of other vehicles before the booked departure times of the other vehicles obstructed by the first vehicle arrive, so that the other vehicles when departing can leave their current positions without being obstructed, thereby optimizing the parking result.

In addition, the server acquires the real-time navigation route of the second vehicle which is in the moving state. When the first vehicle in the parking state is on the real-time navigation route of the second vehicle, the server determines the first parking position of the first vehicle based on the position information of the first vehicle and the real-time navigation route of the second vehicle, and sends a first instruction to the first vehicle instructing the first vehicle to move into the first parking position. In this way, if the first vehicle blocks the moving route of another vehicle that is moving, the first vehicle is automatically controlled to move out of the booked navigation route of the other vehicle to allow the other vehicle to pass, thereby optimizing the parking result.

Fig. 14 is a block diagram illustrating a vehicle control apparatus according to yet another exemplary embodiment. The vehicle control apparatus is used for scheduling a parking position of a vehicle, and may be implemented as part of the vehicle 120, which has entered or is to enter a parking state, in the implementation environment shown in Fig. 1 through software, hardware or a combination thereof. The apparatus for scheduling the parking position of the vehicle may comprise: a first receiving module 1401 and a first control module 1402.

The first receiving module 1401 is configured to receive a first instruction containing a first parking position from a server, the first parking position being determined by the server based on position information and trip information of at least one vehicle including a first vehicle which has entered or is to enter a parking state, the first vehicle being an unmanned vehicle, and the trip information including at least one of a real-time navigation route, a booked departure time and a booked navigation route.

The first control module 1402 is configured to control the first vehicle to move into the first parking position according to the first instruction received by the first receiving module 1401.

To sum up, according to the vehicle control apparatus provided by this embodiment, by acquiring position information and trip information of at least one vehicle, determining a first parking position of a first vehicle based on the position information and the trip information of the at least one vehicle, and sending a first instruction to the first vehicle instructing the first vehicle to move into the first parking position, a server can determine a parking position of a vehicle to be controlled based on trip information of the vehicle to be controlled and of its surrounding vehicles during a process of automatically controlling the vehicle to park, thereby preventing the vehicle to be controlled from blocking moving routes of its surrounding vehicles and hence optimizing the parking result.

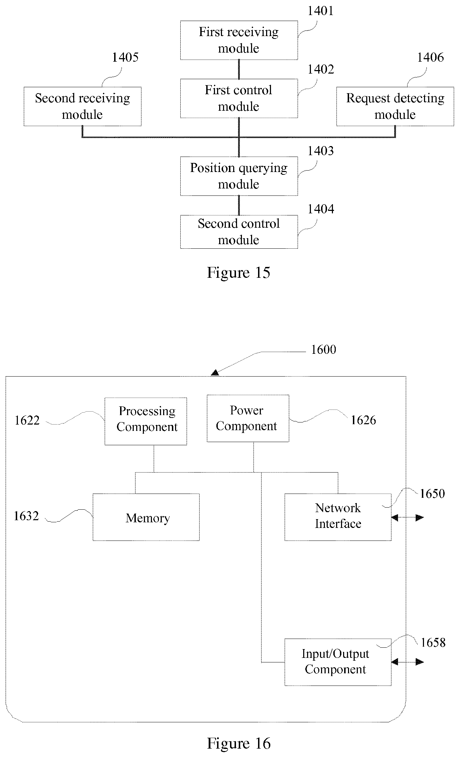

Fig. 15 is a block diagram illustrating a vehicle control apparatus according to yet another exemplary embodiment. The vehicle control apparatus is used for scheduling a parking position of a vehicle, and may be implemented as part of the vehicle 120, which has entered or is to enter a parking state, in the implementation environment shown in Fig. 1 through software, hardware or a combination thereof. The apparatus for scheduling the parking position of the vehicle may comprise: a first receiving module 1401 and a first control module 1402.

The first receiving module 1401 is configured to receive a first instruction containing a first parking position from a server, the first parking position being determined by the server based on position information and trip information of at least one vehicle including a first vehicle which has entered or is to enter a parking state, the first vehicle being an unmanned vehicle, and the trip information including at least one of a real-time navigation route, a booked departure time and a booked navigation route.

The first control module 1402 is configured to control the first vehicle to move into the first parking position according to the first instruction received by the first receiving module 1401.

Optionally, the apparatus further comprises: a position querying module 1403 configured to, when a give-way request sent by a second vehicle is detected, query a fourth parking position, which is an available parking position within a preset range surrounding the vehicle and is out of a route for the second vehicle to arrive at a current position of the first vehicle; and a second control module 1404 configured to control the first vehicle to move into the fourth parking position queried by the position querying module.

Optionally, the apparatus further comprises: a second receiving module 1405 configured to receive the give-way request sent by the second vehicle via short range wireless communications, before the position querying module 1403 queries the fourth parking position; or a request detecting module 1406 configured to detect the give-way request sent by the second vehicle via an acoustic and optical signal, before the position querying module 1403 queries the fourth parking position.

To sum up, according to the vehicle control apparatus provided by this embodiment, by acquiring position information and trip information of at least one vehicle, determining a first parking position of a first vehicle based on the position information and the trip information of the at least one vehicle, and sending a first instruction to the first vehicle instructing the first vehicle to move into the first parking position, a server can determine a parking position of a vehicle to be controlled based on trip information of the vehicle to be controlled and of its surrounding vehicles during a process of automatically controlling the vehicle to park, thereby preventing the vehicle to be controlled from blocking moving routes of its surrounding vehicles and hence optimizing the parking result.

An embodiment of this invention also provides a vehicle control apparatus capable of realizing the above vehicle control methods in the above embodiments. The vehicle control apparatus comprises a processor and a memory configured to store instructions executable by the processor.

The vehicle control apparatus may be implemented as the server 110 in the implementation environment shown in Fig. 1 or part of it or as part of the vehicle 120, which has entered or is to enter a parking state, in the implementation environment shown in Fig. 1.

When the vehicle control apparatus is implemented as the server 110 in the implementation environment shown in Fig. 1 or part of it, the processor of the vehicle control apparatus is configured to: acquire position information and trip information of at least one vehicle including a first vehicle which has entered or is to enter a parking state, the first vehicle being an unmanned vehicle, and the trip information including at least one of a real-time navigation route, a booked departure time and a booked navigation route; determine a first parking position of the first vehicle based on the position information and the trip information of the at least one vehicle; and send a first instruction to the first vehicle instructing the first vehicle to move into the first parking position.

Optionally, the at least one vehicle includes a second vehicle which has entered the parking state, and the trip information includes the booked departure time and the booked navigation route. Determining the first parking position of the first vehicle based on the position information and the trip information of the at least one vehicle comprises: when the booked departure time of the first vehicle is later than that of the second vehicle and the first vehicle is on the booked navigation route of the second vehicle, determining the first parking position of the first vehicle based on the position information of the first vehicle and the booked navigation route of the second vehicle, the first parking position being out of the booked navigation route of the second vehicle; or when the booked departure time of the first vehicle is null, the booked departure time of the second vehicle is not null, and the first vehicle is on the booked navigation route of the second vehicle, determining the first parking position of the first vehicle based on the position information of the first vehicle and the booked navigation route of the second vehicle, the first parking position being out of the booked navigation route of the second vehicle.

Optionally, the second vehicle is an unmanned vehicle, and the first parking position is a position where the second vehicle is located. The processor is further configured to: determine a second parking position of the second vehicle, the second parking position being an original position where the first vehicle is located before receiving the first instruction; and send a second instruction to the second vehicle instructing the second vehicle to move into the second parking position.

Optionally, the at least one vehicle includes a second vehicle which is in a moving state, and trip information of the second vehicle includes a real-time navigation route of the second vehicle. Determining the first parking position of the first vehicle based on the position information and the trip information of the at least one vehicle comprises: when the first vehicle is on the real-time navigation route of the second vehicle, determining the first parking position of the first vehicle based on the position information of the first vehicle and the real-time navigation route of the second vehicle, the first parking position being out of the real-time navigation route of the second vehicle.

Optionally, the processor is further configured to: when the second vehicle passes an original position where the first vehicle is located before receiving the first instruction, send a third instruction to the first vehicle instructing the first vehicle to return to the original position.

The trip information includes the booked departure time. Determining the first parking position of the first vehicle based on the position information and the trip information of the at least one vehicle comprises: when the booked departure time of the first vehicle is not later than a designated time point, determining an empty parking position in a first set of parking positions as the first parking position; when the booked departure time of the first vehicle is later than the designated time point, determining an empty parking position in a second set of parking positions as the first parking position. For any parking position in the first set of parking positions, the parking position is on a departure route from at least one parking position in the second set of parking positions.

Optionally, before sending the first instruction to the first vehicle, the processor is further configured to: when the first parking position is the empty parking position in the first set of parking positions, detect whether the first parking position is on a unique arrival route to a third parking position, which is an empty parking position in the second set of parking positions; when the first parking position is on the unique arrival route to the third parking position, determine an empty parking position in a third set of parking positions as a buffering parking position, the parking positions in the third set of parking positions being out of arrival routes to the parking positions in the first and second sets of parking positions; and send a fourth instruction to the first vehicle instructing the first vehicle to move into the buffering parking position. Sending the first instruction to the first vehicle comprises: when detecting that a vehicle moves into the third parking position, sending the first instruction to the first vehicle.

When the vehicle control apparatus is implemented as part of the vehicle 120, which has entered or is to enter a parking state, in the implementation environment shown in Fig. 1, the processor of the vehicle control apparatus is configured to: receive a first instruction containing a first parking position from a server, the first parking position being determined by the server based on position information and trip information of at least one vehicle including a first vehicle which has entered or is to enter a parking state, the first vehicle being an unmanned vehicle, and the trip information including at least one of a real-time navigation route, a booked departure time and a booked navigation route; and control the first vehicle to move into the first parking position according to the first instruction.

Optionally, the processor is further configured to: when detecting a give-way request sent by a second vehicle, query a fourth parking position, which is an available parking position within a preset range surrounding the vehicle and is out of the route for the second vehicle to arrive at a current position of the first vehicle; and control the first vehicle to move into the fourth parking position.

Optionally, before querying the fourth parking position, the processor is further configured to: receive the give-way request sent by the second vehicle via short range wireless communications; or detect the give-way request sent by the second vehicle via an acoustic and optical signal.

Regarding the apparatuses in the above embodiments, the specific manners for the respective modules to perform operations have been described in the method embodiments, and will not be elaborated herein.

Fig. 16 is a block diagram illustrating an apparatus 1600 according to an exemplary embodiment. For example, the apparatus 1600 may be provided as a server or an automatic driving system of a vehicle. Referring to Fig. 16, the apparatus 1600 comprises: a processing component 1622 which further comprises one or more processors, and memory resources represented by a memory 1632 for storing instructions executable by the processing component 1622, such as applications. The applications stored in the memory 1632 may comprise one or more modules, each corresponding to a set of instructions. In addition, the processing component 1622 is configured to execute instructions to perform the above vehicle control method executed by the above processor or vehicle.

The apparatus 1600 may further comprise a power component 1626 configured to perform power supply management for the apparatus 1600, a wired or wireless network interface 1650 configured to connect the apparatus 1600 to a network and an input/output (I/O) component 1658. The apparatus 1600 may operate an operating system stored in the memory 1632, such as Windows Server™, Mac OS X™, Unix™, Linux™, FreeBSD™ or the like.

Other embodiments of the invention will be apparent to those skilled in the art from consideration of the specification and practice of the invention disclosed here. It is intended that the specification and examples be considered as exemplary only, with the scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A computer-implemented vehicle control method, comprising:
acquiring (201) position information and trip information of at least one vehicle including a first vehicle which has entered or is to enter a parking state, the first vehicle being an unmanned vehicle, and the trip information including a booked departure time and optionally at least one of a real-time navigation route and a booked navigation route;
determining (202) a first parking position for the first vehicle in a parking area, based on the position information and the trip information of the at least one vehicle; and
sending (203) a first instruction to the first vehicle instructing the first vehicle to move into the first parking position;
**characterized in that** determining the first parking position for the first vehicle based on the position information and the trip information of the at least one vehicle further comprises:
when the booked departure time of the first vehicle is not later than a designated time point, determining an empty parking position in a first set of parking positions of the parking area as the first parking position;
when the booked departure time of the first vehicle is later than the designated time point, determining an empty parking position in a second set of parking positions of the parking area as the first parking position,
wherein, for any parking position in the first set of parking positions, the parking position is on a departure route from at least one parking position in the second set of parking positions.

2. The method according to claim 1, wherein the at least one vehicle includes a second vehicle which has entered the parking state; the trip information further includes the booked navigation route; and
determining the first parking position of the first vehicle based on the position information and the trip information of the at least one vehicle comprises:
when the booked departure time of the first vehicle is later than that of the second vehicle and the first vehicle is on the booked navigation route of the second vehicle, determining the first parking position of the first vehicle based on the position information of the first vehicle and the booked navigation route of the second vehicle, the first parking position being out of the booked navigation route of the second vehicle; and
when the booked departure time of the first vehicle is null, the booked departure time of the second vehicle is not null and the first vehicle is on the booked navigation route of the second vehicle, determining the first parking position of the first vehicle based on the position information of the first vehicle and the booked navigation route of the second vehicle, the first parking position being out of the booked navigation route of the second vehicle.

3. The method according to claim 2, wherein the second vehicle is an unmanned vehicle; the first parking position is a position where the second vehicle is located; and the method further comprises:
determining a second parking position of the second vehicle, the second parking position being an original position where the first vehicle is located before receiving the first instruction; and
sending a second instruction to the second vehicle instructing the second vehicle to move into the second parking position.

4. The method according to claim 1, wherein the at least one vehicle includes a second vehicle which is in a moving state; trip information of the second vehicle includes a real-time navigation route of the second vehicle; and
determining (S1001) the first parking position of the first vehicle based on the position information and the trip information of the at least one vehicle comprises:
when the first vehicle is on the real-time navigation route of the second vehicle, determining (S1002) the first parking position of the first vehicle based on the position information of the first vehicle and the real-time navigation route of the second vehicle, the first parking position being out of the real-time navigation route of the second vehicle.

5. The method according to claim 4, further comprising: when the second vehicle passes an original position where the first vehicle is located before receiving the first instruction, sending (S1005) a third instruction to the first vehicle instructing (S1006) the first vehicle to return to the original position.

6. The method according to claim 1, wherein before sending the first instruction to the first vehicle, the method further comprises:
when the first parking position is the empty parking position in the first set of parking positions, detecting whether the first parking position is on a unique arrival route to a third parking position, which is an empty parking position in the second set of parking positions;
when the first parking position is on the unique arrival route to the third parking position, determining an empty parking position in a third set of parking positions as a buffering parking position, the parking positions in the third set of parking positions being out of arrival routes to the parking positions in the first and second sets of parking positions; and
sending a fourth instruction to the first vehicle instructing the first vehicle to move into the buffering parking position, and
sending the first instruction to the first vehicle comprises: when detecting that a vehicle moves into the third parking position, sending the first instruction to the first vehicle

7. A vehicle control apparatus, comprising:
an information acquiring module (1201) configured to acquire position information and trip information of at least one vehicle including a first vehicle which has entered or is to enter a parking state, the first vehicle being an unmanned vehicle, and the trip information including a booked departure time and optionally at least one of a real-time navigation route and a booked navigation route;
a first position determining module (1202) configured to determine a first parking position for the first in a parking area, based on the position information and the trip information of the at least one vehicle acquired by the information acquiring module; and
a first sending module (1203) configured to send a first instruction to the first vehicle instructing the first vehicle to move into the first parking position determined by the first position determining module;
**characterized in that** the apparatus further comprises:
a fourth determining sub-module (1202d) configured to, when the booked departure time of the first vehicle is not later than a designated time point, determine an empty parking position in a first set of parking positions of the parking area as the first parking position;
a fifth determining sub-module (1202e) configured to, when the booked departure time of the first vehicle is later than the designated time point,
determine an empty parking position in a second set of parking of the parking area as the first parking position,
wherein, for any parking position in the first set of parking positions, the parking position is on a departure route from at least one parking position in the second set of parking positions.

8. The apparatus according to claim 7, wherein the at least one vehicle includes a second vehicle which has entered the parking state; the trip information includes the booked departure time and the booked navigation route; and the first position determining module comprises:
a first determining sub-module (1202a) configured to, when the booked departure time of the first vehicle is later than that of the second vehicle and the first vehicle is on the booked navigation route of the second vehicle, determine the first parking position of the first vehicle based on the position information of the first vehicle and the booked navigation route of the second vehicle, the first parking position being out of the booked navigation route of the second vehicle;
a second determining sub-module (1202b) configured to, when the booked departure time of the first vehicle is null, the booked departure time of the second vehicle is not null, and the first vehicle is on the booked navigation route of the second vehicle, determine the first parking position of the first vehicle based on the position information of the first vehicle and the booked navigation route of the second vehicle, the first parking position being out of the booked navigation route of the second vehicle.

9. The apparatus according to claim 8, wherein the first parking position is a current position of the second vehicle, and the apparatus further comprises:
a second position determining module (1204) configured to determine a second parking position of the second vehicle, the second parking position being an original position where the first vehicle is located before receiving the first instruction; and
a second sending module (1205) configured to send a second instruction to the second vehicle instructing the second vehicle to move into the second parking position.

10. The apparatus according to claim 7, wherein the at least one vehicle includes a second vehicle which is in a moving state; the trip information of the second vehicle includes a real-time navigation route of the second vehicle; and the first position determining module comprises:
a third determining sub-module (1202c) configured to, when the first vehicle is on the real-time navigation route of the second vehicle, determine the first parking position of the first vehicle based on the position information of the first vehicle and the real-time navigation route of the second vehicle, the first parking position being out of the real-time navigation route of the second vehicle.

11. The apparatus of claim 10 further comprising:
a third sending module configured to, when the second vehicle passes an original position where the first vehicle is located before receiving the first instruction, send a third instruction to the first vehicle instructing the first vehicle to return to the original position.

12. The apparatus according to claim 7, further comprising:
a detecting module (1207) configured to, when the first parking position is the empty parking position in the first set of parking positions, detect, before the first sending module sends the first instruction to the first vehicle, whether the first parking position is on a unique arrival route to a third parking position, which is an empty parking position in the second set of parking positions;
a third position determining module (1208) configured to, when the detecting module detects that the first parking position is on the unique arrival route to the third parking position, determine an empty parking position in a third set of parking positions as a buffering parking position, the parking positions in the third set of parking positions being out of arrival routes to the parking positions in the first and second sets of parking positions; and
a fourth sending module (1209) configured to send a fourth instruction to the first vehicle instructing the first vehicle to move into the buffering parking position, wherein
the first sending module (1203) is configured to, when it is detected that a vehicle moves into the third parking position, send the first instruction to the first vehicle.

13. A vehicle control apparatus, comprising:
a processor (1622); and
a memory (1632) configured to store instructions executable by the processor (1622),
wherein the processor (1622) is configured to perform the method of any of claims 1 to 6.

14. A computer program including instructions for executing the steps of a vehicle control method according to any one of claims 1 to 6, when said program is executed by a computer.

15. A recording medium readable by a computer and having recorded thereon a computer program including instructions for executing the steps of a vehicle control method according to any one of claims 1 to 6, when said program is executed by said computer.

## Patentansprüche

1. Computerimplementiertes Fahrzeugsteuerungsverfahren, das Folgendes aufweist:
Erfassen (201) von Positionsinformationen und Fahrtinformationen von wenigstens einem Fahrzeug, das ein erstes Fahrzeug beinhaltet, das in einen Parkzustand eintritt oder eintreten soll, wobei das erste Fahrzeug ein unbemanntes Fahrzeug ist und die Fahrtinformationen eine gebuchte Abfahrzeit und wahlweise wenigstens eine von einer Echtzeitnavigationsroute und einer gebuchten Navigationsroute aufweisen;
Bestimmen (202) einer ersten Parkposition für das erste Fahrzeug in einem Parkbereich auf Basis der Positionsinformationen und der Fahrtinformationen des wenigstens einen Fahrzeugs; und
Senden (203) einer ersten Anweisung an das erste Fahrzeug, die das erste Fahrzeug anweist, sich auf die erste Parkposition zu bewegen;
**dadurch gekennzeichnet, dass**
das Bestimmen der ersten Parkposition für das erste Fahrzeug auf Basis der Positionsinformationen und der Fahrtinformationen des wenigstens einen Fahrzeugs ferner Folgendes beinhaltet:
wenn die gebuchte Abfahrzeit des ersten Fahrzeugs nicht später als ein vorgesehener Zeitpunkt ist, Bestimmen einer leeren Parkposition in einem ersten Satz von Parkpositionen des Parkbereichs als die erste Parkposition;
wenn die gebuchte Abfahrzeit des ersten Fahrzeugs später als der vorgesehene Zeitpunkt ist, Bestimmen einer leeren Parkposition in einem zweiten Satz von Parkpositionen des Parkbereichs als die erste Parkposition,
wobei für jedwede Parkposition in dem ersten Satz von Parkpositionen die Parkposition auf einer Abfahrroute von wenigstens einer Parkposition im zweiten Satz von Parkpositionen ist.

2. Verfahren nach Anspruch 1, wobei das wenigstens eine Fahrzeug ein zweites Fahrzeug beinhaltet, das in den Parkzustand eingetreten ist; wobei die Fahrtinformationen ferner die gebuchte Navigationsroute beinhalten; und
das Bestimmen der ersten Parkposition des ersten Fahrzeugs auf Basis der Positionsinformationen und der Fahrtinformationen des wenigstens einen Fahrzeugs Folgendes aufweist:
wenn die gebuchte Abfahrzeit des ersten Fahrzeugs später als die des zweiten Fahrzeugs ist und das erste Fahrzeug auf der gebuchten Navigationsroute des zweiten Fahrzeugs ist, Bestimmen der ersten Parkposition des ersten Fahrzeugs auf Basis der Positionsinformationen des ersten Fahrzeugs und der gebuchten Navigationsroute des zweiten Fahrzeugs, wobei die erste Parkposition außerhalb der gebuchten Navigationsroute des zweiten Fahrzeugs ist; und,
wenn die gebuchte Abfahrzeit des ersten Fahrzeugs null ist, die gebuchte Abfahrzeit des zweiten Fahrzeugs nicht null ist und das erste Fahrzeug auf der gebuchten Navigationsroute des zweiten Fahrzeugs ist, Bestimmen der ersten Parkposition des ersten Fahrzeugs auf Basis der Positionsinformationen des ersten Fahrzeugs und der gebuchten Navigationsroute des zweiten Fahrzeugs, wobei die erste Parkposition außerhalb der gebuchten Navigationsroute des zweiten Fahrzeugs ist.

3. Verfahren nach Anspruch 2, wobei das zweite Fahrzeug ein unbemanntes Fahrzeug ist; die erste Parkposition eine Position ist, an der sich das zweite Fahrzeug befindet; und das Verfahren ferner Folgendes aufweist:
Bestimmen einer zweiten Parkposition des zweiten Fahrzeugs, wobei die zweite Parkposition eine Ausgangsposition ist, wo sich das erste Fahrzeug vor Empfangen der ersten Anweisung befindet; und
Senden einer zweiten Anweisung an das zweite Fahrzeug, die das zweite Fahrzeug anweist, sich auf die zweite Parkposition zu bewegen.

4. Verfahren nach Anspruch 1, wobei das wenigstens eine Fahrzeug ein zweites Fahrzeug beinhaltet, das sich in einem Bewegungszustand befindet, Fahrtinformationen des zweiten Fahrzeugs eine Echtzeit-Navigationsroute des zweiten Fahrzeugs beinhalten und
das Bestimmen (S1001) der ersten Parkposition des ersten Fahrzeugs auf Basis der Positionsinformationen und der Fahrtinformationen des wenigstens einen Fahrzeugs Folgendes aufweist:
wenn das erste Fahrzeug auf der Echtzeit-Navigationsroute des zweiten Fahrzeugs ist, Bestimmen (S1002) der ersten Parkposition des ersten Fahrzeugs auf Basis der Positionsinformationen des ersten Fahrzeugs und der Echtzeit-Navigationsroute des zweiten Fahrzeugs, wobei die erste Parkposition außerhalb der Echtzeit-Navigationsroute des zweiten Fahrzeugs ist.

5. Verfahren nach Anspruch 4, das ferner Folgendes aufweist: wenn das zweite Fahrzeug an einer Ausgangsposition vorbeifährt, wo sich das erste Fahrzeug vor Empfangen der ersten Anweisung befindet, Senden (S1005) einer dritten Anweisung an das erste Fahrzeug, die das erste Fahrzeug zum Zurückkehren zur Ausgangsposition anweist (S1006).

6. Verfahren nach Anspruch 1, wobei das Verfahren vor Senden der ersten Anweisung an das erste Fahrzeug ferner Folgendes aufweist:
wenn die erste Parkposition die leere Parkposition im ersten Satz von Parkpositionen ist, Erkennen, ob die erste Parkposition auf einer einmaligen Anfahrroute zu einer dritten Parkposition ist, die eine leere Parkposition im zweiten Satz von Parkpositionen ist;
wenn die erste Parkposition auf der einmaligen Anfahrroute zur dritten Parkposition ist, Bestimmen einer leeren Parkposition in einem dritten Satz von Parkpositionen als eine Pufferparkposition, wobei die Parkpositionen im dritten Satz von Parkpositionen außerhalb von Anfahrrouten zu den Parkpositionen im ersten und zweiten Satz von Parkpositionen sind; und
Senden einer vierten Anweisung an das erste Fahrzeug, die das erste Fahrzeug anweist, sich auf die Pufferparkposition zu bewegen, und
wobei das Senden der ersten Anweisung an das erste Fahrzeug Folgendes aufweist: Senden der ersten Anweisung an das erste Fahrzeug, wenn erkannt wird, dass sich ein Fahrzeug auf die dritte Parkposition bewegt.

7. Fahrzeugsteuervorrichtung, die Folgendes aufweist:
ein Informationserfassungsmodul (1201), das konfiguriert ist zum Erfassen von Positionsinformationen und Fahrtinformationen von wenigstens einem Fahrzeug, das ein erstes Fahrzeug beinhaltet, das in einen Parkzustand eintritt oder eintreten soll, wobei das erste Fahrzeug ein unbemanntes Fahrzeug ist und die Fahrtinformationen eine gebuchte Abfahrzeit und wahlweise wenigstens eine von einer Echtzeitnavigationsroute und einer gebuchten Navigationsroute aufweisen;
ein erstes Positionsbestimmungsmodul (1202), das konfiguriert ist zum Bestimmen einer ersten Parkposition für das erste in einem Parkbereich auf Basis der durch das Informationserfassungsmodul erfassten Positionsinformationen und Fahrtinformationen des wenigstens einen Fahrzeugs; und
ein erstes Sendemodul (1203), das konfiguriert ist zum Senden einer ersten Anweisung an das erste Fahrzeug, die das erste Fahrzeug anweist, sich auf die durch das erste Positionsbestimmungsmodul bestimmte erste Parkposition zu bewegen;
**dadurch gekennzeichnet, dass**
die Vorrichtung ferner Folgendes aufweist:
ein viertes Bestimmungsuntermodul (1202d), das konfiguriert ist zum Bestimmen einer leeren Parkposition in einem ersten Satz von Parkpositionen des Parkbereichs als die erste Parkposition, wenn die gebuchte Abfahrzeit des ersten Fahrzeugs nicht später als ein vorgesehener Zeitpunkt ist;
ein fünftes Bestimmungsuntermodul (1202e), das konfiguriert ist zum Bestimmen einer leeren Parkposition in einem zweiten Satz von Parkpositionen des Parkbereichs als die erste Parkposition, wenn die gebuchte Abfahrzeit des ersten Fahrzeugs später als der vorgesehene Zeitpunkt ist,
wobei für jedwede Parkposition in dem ersten Satz von Parkpositionen die Parkposition auf einer Abfahrroute von wenigstens einer Parkposition im zweiten Satz von Parkpositionen ist.

8. Vorrichtung nach Anspruch 7, wobei das wenigstens eine Fahrzeug ein zweites Fahrzeug beinhaltet, das in den Parkzustand eingetreten ist, die Fahrtinformationen die gebuchte Abfahrzeit und die gebuchte Navigationsroute beinhalten, und das erste Positionsbestimmungsmodul Folgendes aufweist:
ein erstes Bestimmungsuntermodul (1202a), das konfiguriert ist zum Bestimmen der ersten Parkposition des ersten Fahrzeugs auf Basis der Positionsinformationen des ersten Fahrzeugs und der gebuchten Navigationsroute des zweiten Fahrzeugs, wenn die gebuchte Abfahrzeit des ersten Fahrzeugs später als die des zweiten Fahrzeugs ist und das erste Fahrzeug auf der gebuchten Navigationsroute des zweiten Fahrzeugs ist, wobei die erste Parkposition außerhalb der gebuchten Navigationsroute des zweiten Fahrzeugs ist; und
ein zweites Bestimmungsuntermodul (1202b), das konfiguriert ist zum Bestimmen der ersten Parkposition des ersten Fahrzeugs auf Basis der Positionsinformationen des ersten Fahrzeugs und der gebuchten Navigationsroute des zweiten Fahrzeugs, wenn die gebuchte Abfahrzeit des ersten Fahrzeugs null ist, die gebuchte Abfahrzeit des zweiten Fahrzeugs nicht null ist und das erste Fahrzeug auf der gebuchten Navigationsroute des zweiten Fahrzeugs ist, wobei die erste Parkposition außerhalb der gebuchten Navigationsroute des zweiten Fahrzeugs ist.

9. Vorrichtung nach Anspruch 8, wobei die erste Parkposition eine aktuelle Position des zweiten Fahrzeugs ist und die Vorrichtung ferner Folgendes aufweist:
ein zweites Positionsbestimmungsmodul (1204), das konfiguriert ist zum Bestimmen einer zweiten Parkposition des zweiten Fahrzeugs, wobei die zweite Parkposition eine Ausgangsposition ist, wo sich das erste Fahrzeug vor Empfangen der ersten Anweisung befindet; und
ein zweites Sendemodul (1205), das konfiguriert ist zum Senden einer zweiten Anweisung an das zweite Fahrzeug, die das zweite Fahrzeug anweist, sich auf die zweite Parkposition zu bewegen.

10. Vorrichtung nach Anspruch 7, wobei das wenigstens eine Fahrzeug ein zweites Fahrzeug beinhaltet, das sich in einem Bewegungszustand befindet; die Fahrtinformationen des zweiten Fahrzeugs eine Echtzeit-Navigationsroute des zweiten Fahrzeugs beinhalten und das erste Positionsbestimmungsmodul Folgendes aufweist:
ein drittes Bestimmungsuntermodul (1202c), das konfiguriert ist zum Bestimmen der ersten Parkposition des ersten Fahrzeugs auf Basis der Positionsinformationen des ersten Fahrzeugs und der Echtzeit-Navigationsroute des zweiten Fahrzeugs, wenn das erste Fahrzeug auf der Echtzeit-Navigationsroute des zweiten Fahrzeugs ist, wobei die erste Parkposition außerhalb der Echtzeit-Navigationsroute des zweiten Fahrzeugs ist.

11. Vorrichtung nach Anspruch 10, die ferner Folgendes aufweist:
ein drittes Sendemodul, das konfiguriert ist zum Senden einer dritten Anweisung an das erste Fahrzeug, die das erste Fahrzeug zum Zurückkehren zur Ausgangsposition anweist, wenn das zweite Fahrzeug an einer Ausgangsposition vorbeifährt, wo sich das erste Fahrzeug vor Empfangen der ersten Anweisung befindet.

12. Vorrichtung nach Anspruch 7, die ferner Folgendes aufweist:
ein Erkennungsmodul (1207), das konfiguriert ist zum Erkennen, wenn die erste Parkposition die leere Parkposition im ersten Satz von Parkpositionen ist, bevor das erste Sendemodul die erste Anweisung an das erste Fahrzeug sendet, ob die erste Parkposition auf einer einmaligen Anfahrroute zu einer dritten Parkposition ist, die eine leere Parkposition im zweiten Satz von Parkpositionen ist;
ein drittes Positionsbestimmungsmodul (1208), das konfiguriert ist zum Bestimmen einer leeren Parkposition in einem dritten Satz von Parkpositionen als eine Pufferparkposition, wenn das Erkennungsmodul erkennt, dass die erste Parkposition auf der einmaligen Anfahrroute zur dritten Parkposition ist, wobei die Parkpositionen im dritten Satz von Parkpositionen außerhalb von Anfahrrouten zu den Parkpositionen im ersten und zweiten Satz von Parkpositionen sind; und
ein viertes Sendemodul (1209), das konfiguriert ist zum Senden einer vierten Anweisung an das erste Fahrzeug, die das erste Fahrzeug anweist, sich auf die Pufferparkposition zu bewegen, wobei
das erste Sendemodul (1203) konfiguriert ist zum Senden der ersten Anweisung an das erste Fahrzeug, wenn erkannt wird, dass sich ein Fahrzeug auf die dritte Parkposition bewegt.

13. Fahrzeugsteuervorrichtung, die Folgendes aufweist:
einen Prozessor (1622) und
einen Speicher (1632), der zum Speichern von durch den Prozessor (1622) ausführbaren Anweisungen konfiguriert ist,
wobei der Prozessor (1622) zum Durchführen des Verfahrens nach einem der Ansprüche 1 bis 6 konfiguriert ist.

14. Computerprogramm mit Anweisungen zum Ausführen der Schritte eines Fahrzeugsteuerungsverfahrens nach einem der Ansprüche 1 bis 6, wenn das genannte Programm von einem Computer ausgeführt wird.

15. Aufzeichnungsmedium, das von einem Computer lesbar ist und auf dem ein Computerprogramm mit Anweisungen zum Ausführen der Schritte eines Fahrzeugsteuerungsverfahrens nach einem der Ansprüche 1 bis 6, wenn das genannte Programm von dem genannten Computer ausgeführt wird, aufgezeichnet ist.

## Revendications

1. Procédé de commande de véhicule mis en oeuvre par ordinateur, comprenant :
acquérir (201) une information de position et une information de trajet d'au moins un véhicule y compris un premier véhicule qui est entré ou doit entrer dans un état de stationnement, le premier véhicule étant un véhicule inhabité, et l'information de trajet comprenant une heure de départ réservée et optionnellement au moins l'une d'entre une route de navigation en temps réel et une route de navigation réservée ;
déterminer (202) une première position de stationnement pour le premier véhicule dans une aire de stationnement, sur la base de l'information de position et de l'information de trajet du au moins un véhicule ; et
envoyer (203) une première instruction au premier véhicule instruisant le premier véhicule de se déplacer dans la première position de stationnement ;
**caractérisé en ce que**
déterminer la première position de stationnement pour le premier véhicule sur la base de l'information de position et de l'information de trajet du au moins un véhicule comprend en outre :
lorsque l'heure de départ réservée du premier véhicule n'est pas plus tard qu'un point désigné dans le temps, déterminer une position de stationnement vide dans un premier ensemble de positions de stationnement de l'aire de stationnement comme la première position de stationnement ;
lorsque l'heure de départ réservée du premier véhicule est plus tard que le point désigné dans le temps, déterminer une position de stationnement vide dans un deuxième ensemble de positions de stationnement de l'aire de stationnement comme la première position de stationnement,
dans lequel, pour une position de stationnement quelconque dans le premier ensemble de positions de stationnement, la position de stationnement est sur une route de départ d'au moins une position de stationnement dans le deuxième ensemble de positions de stationnement.

2. Procédé selon la revendication 1, dans lequel le au moins un véhicule comprend un deuxième véhicule qui est entré dans l'état de stationnement ; l'information de trajet comprend en outre la route de navigation réservée ; et
déterminer la première position de stationnement du premier véhicule sur la base de l'information de position et de l'information de trajet du au moins un véhicule comprend :
lorsque l'heure de départ réservée du premier véhicule est plus tard que celle du deuxième véhicule et que le premier véhicule est sur la route de navigation réservée du deuxième véhicule, déterminer la première position de stationnement du premier véhicule sur la base de l'information de position du premier véhicule et de la route de navigation réservée du deuxième véhicule, la première position de stationnement étant hors de la route de navigation réservée du deuxième véhicule ; et
lorsque l'heure de départ réservée du premier véhicule est nulle, l'heure de départ réservée du deuxième véhicule n'est pas nulle et le premier véhicule est sur la route de navigation réservée du deuxième véhicule, déterminer la première position de stationnement du premier véhicule sur la base de l'information de position du premier véhicule et de la route de navigation réservée du deuxième véhicule, la première position de stationnement étant hors de la route de navigation réservée du deuxième véhicule.

3. Procédé selon la revendication 2, dans lequel le deuxième véhicule est un véhicule inhabité ; la première position de stationnement est une position à laquelle le deuxième véhicule est situé ; et le procédé comprend en outre :
déterminer une deuxième position de stationnement du deuxième véhicule, la deuxième position de stationnement étant une position originale à laquelle le premier véhicule est situé avant de recevoir la première instruction ; et
envoyer une deuxième instruction au deuxième véhicule instruisant le deuxième véhicule de se déplacer dans la deuxième position de stationnement.

4. Procédé selon la revendication 1, dans lequel le au moins un véhicule comprend un deuxième véhicule qui est dans un état de déplacement ; l'information de trajet du deuxième véhicule comprend une route de navigation en temps réel du deuxième véhicule ; et
déterminer (S1001) la première position de stationnement du premier véhicule sur la base de l'information de position et de l'information de trajet du au moins un véhicule comprend :
lorsque le premier véhicule est sur la route de navigation en temps réel du deuxième véhicule, déterminer (S1002) la première position de stationnement du premier véhicule sur la base de l'information de position du premier véhicule et de la route de navigation en temps réel du deuxième véhicule, la première position de stationnement étant hors de la route de navigation en temps réel du deuxième véhicule.

5. Procédé selon la revendication 4, comprenant en outre : lorsque le deuxième véhicule dépasse une position originale où le premier véhicule est situé avant de recevoir la première instruction, envoyer (S 1005) une troisième instruction au premier véhicule instruisant (S1006) le premier véhicule de retourner à la position originale.

6. Procédé selon la revendication 1, dans lequel avant d'envoyer la première instruction au premier véhicule, le procédé comprend en outre :
lorsque la première position de stationnement est la position de stationnement vide dans le premier ensemble de positions de stationnement, détecter si la première position de stationnement est sur une route d'arrivée unique vers une troisième position de stationnement, laquelle est une position de stationnement vide dans le deuxième ensemble de positions de stationnement ;
lorsque la première position de stationnement est sur la route d'arrivée unique vers la troisième position de stationnement, déterminer une position de stationnement vide dans un troisième ensemble de positions de stationnement comme une position de stationnement tampon, les positions de stationnement dans le troisième ensemble de positions de stationnement étant hors des routes d'arrivée vers les positions de stationnement dans le premier et le deuxième ensemble de positions de stationnement ; et
envoyer une quatrième instruction au premier véhicule instruisant le premier véhicule de se déplacer dans la position de stationnement tampon, et
envoyer la première instruction au premier véhicule comprend : en détectant qu'un véhicule se déplace dans la troisième position de stationnement, envoyer la première instruction au premier véhicule.

7. Appareil de commande de véhicule, comprenant :
un module d'acquisition d'informations (1201) configuré pour acquérir une information de position et une information de trajet du au moins un véhicule comprenant un premier véhicule qui est entré ou doit entrer dans une aire de stationnement, le premier véhicule étant un véhicule inhabité, et l'information de trajet comprenant une heure de départ réservée et optionnellement au moins l'une d'entre une route de navigation en temps réel et une route de navigation réservée ;
un module de détermination de première position (1202) configuré pour déterminer une première position de stationnement pour le premier dans une aire de stationnement, sur la base de l'information de position et de l'information de trajet du au moins un véhicule acquises par le module d'acquisition d'informations ; et
un premier module d'envoi (1203) configuré pour envoyer une première instruction au premier véhicule instruisant le premier véhicule de se déplacer dans la première position de stationnement déterminée par le module de détermination de première position ;
**caractérisé en ce que**
l'appareil comprend en outre :
un quatrième sous-module de détermination (1202d) configuré pour, lorsque l'heure de départ réservée du premier véhicule n'est pas plus tard qu'un point désigné dans le temps, déterminer une position de stationnement vide dans un premier ensemble de positions de stationnement de l'aire de stationnement comme la première position de stationnement ;
un cinquième sous-module de détermination (1202e) configuré pour, lorsque l'heure de départ réservée du premier véhicule est plus tard que le point désigné dans le temps, déterminer une position de stationnement vide dans un deuxième ensemble de stationnement de l'aire de stationnement comme la première position de stationnement,
dans lequel, pour une position de stationnement quelconque dans le premier ensemble de positions de stationnement, la position de stationnement est sur une route de départ d'au moins une position de stationnement dans le deuxième ensemble de positions de stationnement.

8. Appareil selon la revendication 7, dans lequel le au moins un véhicule comprend un deuxième véhicule qui est entré dans l'état de stationnement ; l'information de trajet comprend l'heure de départ réservée et la route de navigation réservée ; et le module de détermination de première position comprend :
un premier sous-module de détermination (1202a) configuré pour, lorsque l'heure de départ réservée du premier véhicule est plus tard que celle du deuxième véhicule et que le premier véhicule est sur la route de navigation réservée du deuxième véhicule, déterminer la première position de stationnement du premier véhicule sur la base de l'information de position du premier véhicule et de la route de navigation réservée du deuxième véhicule, la première position de stationnement étant hors de la route de navigation réservée du deuxième véhicule ; et
un deuxième sous-module de détermination (1202b) configuré pour, lorsque l'heure de départ réservée du premier véhicule est nulle, l'heure de départ réservée du deuxième véhicule n'est pas nulle, et le premier véhicule est sur la route de navigation réservée du deuxième véhicule, déterminer la première position de stationnement du premier véhicule sur la base de l'information de position du premier véhicule et de la route de navigation réservée du deuxième véhicule, la première position de stationnement étant hors de la route de navigation réservée du deuxième véhicule.

9. Appareil selon la revendication 8, dans lequel la première position de stationnement est une position courante du deuxième véhicule, et l'appareil comprend en outre :
un module de détermination de deuxième position (1204) configuré pour déterminer une deuxième position de stationnement du deuxième véhicule, la deuxième position de stationnement étant une position originale à laquelle le premier véhicule est situé avant de recevoir la première instruction ; et
un deuxième module d'envoi (1205) configuré pour envoyer une deuxième instruction au deuxième véhicule instruisant le deuxième véhicule de se déplacer dans la deuxième position de stationnement.

10. Appareil selon la revendication 7, dans lequel le au moins un véhicule comprend un deuxième véhicule qui est dans un état de déplacement ; l'information de trajet du deuxième véhicule comprend une route de navigation en temps réel du deuxième véhicule ; et le module de détermination de la première position comprend :
un troisième sous-module de détermination (1202c) configuré pour, lorsque le premier véhicule est sur la route de navigation en temps réel du deuxième véhicule, déterminer la première position de stationnement du premier véhicule sur la base de l'information de position du premier véhicule et de la route de navigation en temps réel du deuxième véhicule, la première position de stationnement étant hors de la route de navigation en temps réel du deuxième véhicule.

11. Appareil selon la revendication 10, comprenant en outre :
un troisième module d'envoi configuré pour, lorsque le deuxième véhicule dépasse une position originale où le premier véhicule est situé avant de recevoir la première instruction, envoyer une troisième instruction au premier véhicule instruisant le premier véhicule de retourner à la position originale.

12. Appareil selon la revendication 7, comprenant en outre :
un module de détection (1207) configuré pour, lorsque la première position de stationnement est la position de stationnement vide dans le premier ensemble de positions de stationnement, détecter, avant que le premier module d'envoi n'envoie la première instruction au premier véhicule, si la première position de stationnement est sur une route d'arrivée unique vers une troisième position de stationnement, laquelle est une position de stationnement vide dans le deuxième ensemble de positions de stationnement ;
un module de détermination de troisième position (1208) configuré pour, lorsque le module de détection détecte que la première position de stationnement est sur la route d'arrivée unique vers la troisième position de stationnement, déterminer une position de stationnement vide dans un troisième ensemble de positions de stationnement comme une position de stationnement tampon, les positions de stationnement dans le troisième ensemble de positions de stationnement étant hors des routes d'arrivée vers les positions de stationnement dans le premier et le deuxième ensemble de positions de stationnement ; et
un quatrième module d'envoi (1209) configuré pour envoyer une quatrième instruction au premier véhicule instruisant le premier véhicule de se déplacer dans la position de stationnement tampon,
dans lequel
le premier module d'envoi (1203) est configuré pour, lorsqu'il est détecté qu'un véhicule se déplace dans la troisième position de stationnement, envoyer la première instruction au premier véhicule.

13. Appareil de commande de véhicule, comprenant :
un processeur (1622) ; et
une mémoire (1632) configurée pour stocker des instructions exécutables par le processeur (1622),
où le processeur (1622) est configuré pour exécuter le procédé selon l'une quelconque des revendications 1 à 6.

14. Programme informatique comprenant des instructions pour exécuter les étapes d'un procédé de commande de véhicule selon l'une quelconque des revendications 1 à 6, où ledit programme est exécuté par un ordinateur.

15. Support d'enregistrement lisible par un ordinateur et ayant enregistré dessus un programme informatique comprenant des instructions pour exécuter les étapes d'un procédé de commande de véhicule selon l'une quelconque des revendications 1 à 6, où ledit programme est exécuté par ledit ordinateur.
